# EUROPEAN PATENT APPLICATION

(11) **EP 4 711 480 A1**
(43) Date of publication of application: **18.03.2026**
(21) Application number: 24425042.9
(22) Date of filing: 13.09.2024
(51) Int. Cl.: C22B 7/04, C21C 5/00, C22B 34/32, C22B 1/00

(54) **PROCESS FOR THE RECOVERY OF METALLIC CHROMIUM FROM SLAGS CONTAINING CHROMIUM OXIDE PRESENT IN A MOLTEN METALLIC MATERIAL FOR THE PRODUCTION OF ALLOYS WITH A HIGH CHROMIUM CONTENT**

(71) Applicant: Misano International Holding SA, 6830 Chiasso (CH)
(72) Inventor: Filippini, Massimiliano, 25123 Brescia (IT); Maffei, Michele, 20153 Milamo (IT)
(74) Representative: Botti & Ferrari S.p.A.

(57) **Abstract**

A process is described for the recovery of metallic chromium from slags containing chromium oxides present in a molten material obtained by melting a metallic load, optionally containing iron, suitable for the production of an alloy with a high chromium content, optionally stainless steel, the process being characterized by adding to said load or to said molten material a mineral composition comprising, in percentages by weight on the total weight of the composition:
30% to 55% of CaO,
35 to 65% of SiO2,
1% to 15% of MgO.

## Description

### Field of application

In its most general aspect, the present invention refers to the production of alloys with a high chromium content, in particular ferrous alloys with a high chromium content, for example chromium stainless steel.

In particular, the present invention concerns a process for the recovery of metallic chromium from slags containing chromium oxides present in a metallic, in particular ferrous, molten material, where the melting is carried out with an electric arc furnace (EAF), induction furnace or a fuel furnace.

### Prior art

As is known, the production of alloys with a high chromium content, in particular stainless steel with chromium or containing chromium-nickel, can be carried out with the aid of a melting device, such as an electric arc or induction furnace.

The main steps of the process comprise loading into the furnace a metallic load, possibly ferrous (e.g. scrap), and alloy elements such as carbon and chromium, melting the load, for example by means of electric arc, obtaining a metallic melt and slags, the possible refining of the melt by blowing oxygen into the furnace, the addition of chromium-containing metal alloys, possibly ferroalloys, and reduction of the amount of chromium oxide in the slags (chromium recovery). Commonly, the liquid steel tapped from the furnace is immediately fed for further processing, in particular in a VOD (Vacuum Oxygen Decarburization) or AOD (Argon Oxygen Decarburization) plant and then in a subsequent continuous casting plant, to which the molten mass is fed through casting ladles.

An important aspect of the process for producing alloys with a high chromium content, in particular stainless steel, lies in the formation of slags in the metallic melt which are mainly made up of metallic and non-metallic oxides that are formed during the melting step and possible subsequent refining.

In general, in the process for producing alloys with a high chromium content, in particular stainless steel, it is desirable to obtain slags with a sufficient fluidity and, in particular, foamy slag, i.e. slags in which there are gas bubbles deriving mainly from reduction reactions of the metallic oxides with carbon or silicon present and/or added in the metallic bath with formation of the metal and carbon oxide (CO).

In fact, the foamy slags allow to minimize the glow of the arc and prevent the splashing of slags on the refractory materials of the arc furnace and on the water-cooled panels of the same, thus guaranteeing an effective protection of the arc. In addition, it is important that this arc protection allows to reduce the limitations on the increase in arc voltage (i.e. arc length), which are usually imposed when the bath is flat and in a liquid state. Through the protection of the arc, it is in fact possible to achieve higher power levels, thus improving the overall thermal efficiency. The insulating effect of the foamy slag also helps to reduce the radiation towards the upper part of the refractory materials inside the furnace and its vault, reducing both electrical and audible noise.

Although the numerous advantages of the foamy slags in the production of alloys with a high chromium content, in particular stainless steel, are well known, it is very difficult to form foamy slags consistently and with a stable foam. The main difficulty lies in the lack of adequate control over the chemistry and viscosity of the slags, which often turn out to be too solid to support an adequate foam.

In the case of steel, in an attempt to overcome the aforementioned drawbacks, it is known adding - to the ferrous material load or directly in the furnace during melting - additives that are precursors to the formation of slags that facilitate the formation of sufficiently fluid slags (liquid slags), such as ferrosilicon (FeSi) or mixtures of quartz (SiO2) and lime. However, ferro-silicon is expensive, and this negatively affects the economy of the production process. In contrast, the mixture of quartz and silica is not particularly effective. In addition, the use of quartz requires additional electricity consumption for its heating and melting. Alternatively, the supply of SiO2 as a fluidizer of the slags can come directly from the oxidation of Si present in the metallic bath and coming from the load. This results in an improvement of the melting process since Si oxidation is an exothermic process but, at the same time, it is important to control the Si content in the metallic bath to maintain the desired steel composition parameters.

Furthermore, it should be noted that in the context of the production of stainless steel, in particular chromium steel, the main oxidation products present in the slags are silica (SiO2) and chromic oxide (Cr2O3) in addition to ferrous oxide (FeO).

While SiO2 has a slags fluidizing action, Cr2O3 is a very effective refractory component that imparts hardness to the slags. In the stainless steel slags, Cr-O balancing occurs at a significantly lower oxygen potential than Fe-O balancing, and chromium (Cr) is oxidized in priority compared to iron (Fe). Consequently, it is essential to carefully control the Cr2O3 content in the slags to obtain a consistency that favours the formation of foamy slag.

Furthermore, it should be noted that the reduction reaction of the chromic oxide with the carbon present in the metallic bath to form metallic chromium (Cr) and CO is very slow and, therefore, this reduction reaction does not contribute significantly to the formation of foamy slags. Although a significant contribution to the formation of foamy slag is made by the reduction of FeO to metallic Fe promoted by Si present in the metallic bath, this reduction action can also be promoted by metallic chromium possibly present in the bath, which involves the formation of chromic oxide. If the chromic oxide is not absorbed in the liquid slags by reduction to Cr under the production conditions, it may come in the form of solid phases of spinel (MgCr2O4 and CaCr2O4) in a non-fluid slag. The consequence is that the recovery of chromium in the metallic bath is ineffective, even in the presence of a high Si content in the metallic bath.

The main object of the present invention is therefore to make available an effective process for the recovery of metallic chromium from slags containing chromium oxides present in a molten material for the production of alloys with a high chromium content, in particular stainless steel, by means of an electric arc furnace, an induction furnace or a fuel furnace, for example methane-fired, or a combination of the above.

Another object of the present invention is to make available a process for the production of alloys with a high chromium content, for example having a Cr content ≥ 5% or a Cr content ≥ 10%, in particular stainless steel, more in particular a chromium stainless steel, by means of electric arc, induction or fuel furnace, which allows an effective recovery of chromium in the metallic melt and the formation of liquid slags, in particular foamy slags.

### Summary of the invention

These objects are primarily achieved, according to the present invention, by a process for the recovery of metallic chromium from slags containing chromium oxides present in a molten material obtained by melting a metallic load suitable for the production of an alloy with high chromium content, in particular stainless steel, the process being characterized by adding to said load or to said molten material a composition of minerals comprising in percentages by weight on the total weight of the composition:
30% to 55% of CaO,
35 to 65% of SiO2,
1% to 15% of MgO.

The aforementioned objects are also achieved, according to the present invention, by a process for the production of an alloy with a high chromium content, in particular stainless steel, comprising the steps of loading in an electric arc furnace, an induction furnace, a fuel furnace or a combination of the foregoing, a metallic load suitable for the production of said alloy with a high chromium content, melting said load in said furnace possibly in the presence of blowing of oxygen in said furnace, obtaining a metallic melt containing slags, the process being characterized by recovering metallic chromium from said slags by adding to said load a mineral composition comprising in percentages by weight on the total weight of the composition:
30% to 55% of CaO,
35 to 65% of SiO2,
1% to 15% of MgO.

The present invention also concerns the use of a mineral composition comprising in percentages by weight on the total weight of the composition:
30% to 55% of CaO,
35 to 65% of SiO2,
1% to 15% of MgO,
for the recovery of metallic chromium from slags containing chromium oxides present in a molten material obtained by melting a metallic load, possibly containing iron, for the production of an alloy with a high chromium content, in particular stainless steel.

Further features and advantages of the present invention will be apparent from the following description given by way of indication and not limitation.

### Detailed description

In the process for the production of an alloy with a high chromium content according to the invention, when said alloy is stainless steel, the load of the material to be melted contains mainly iron generally coming from ferrous scraps and/or ferrous alloys.

Consistently, such an alloy with a high iron content may be a ferrous alloy, preferably stainless steel, or a non-ferrous alloy.

Most preferably, such a non-ferrous alloy may be a cobalt-chromium alloy, a cobalt-chromium-molybdenum alloy or a nickel-chromium alloy.

When such an alloy is of the non-ferrous type, the load of the material to be melted may comprise scraps and/or chromium-containing alloys.

In addition, the load of the material to be melted usually contains alloy elements such as carbon, chromium etc. in appropriate amounts depending on the type of alloy with a high chromium content, for example stainless steel, to be produced. Such alloy elements usually derive from the metallic load used or may be added as distinct load components.

For example, in the metallic load of material to be melted, distinct load components such as alloys with a high chromium content or additional alloy elements may be added.

Preferably, such alloys with a high chromium content are ferroalloys or NiCr alloys, more preferably said ferroalloys being FeSi alloy, FeMn alloy, FeSiMn alloy, FeCr alloy or any combination of the foregoing.

Most preferably, said ferroalloy is an FeCr alloy.

Equally preferred, said additional alloy elements are carbon, in particular in the form of coal, chromium or any combination thereof.

The load of the material to be melted also has silicon (Si) usually contained in the ferrous materials and/or in the ferroalloys and/or added as ferro-silicon.

Such load material is loaded and melted in an electric arc furnace, in an induction furnace or in a fuel furnace usually in several steps in a per se conventional manner.

For example, a part of the load material is loaded into the furnace and brought to melting by electric arc. Then, the loading and melting steps are repeated one or more times for the remaining portions of the load material to be melted until they are exhausted.

Subsequently, according to a specific embodiment of the present process, oxygen can be blown to increase the temperature of the molten metallic bath by activating chemical oxidation processes and to complete the melting.

In particular, in accordance with this specific embodiment, the oxygen is blown as pure molecular oxygen or in admixture with one or more inert gases, for example argon, nitrogen or both, more in particular through high-pressure lances.

In a completely conventional manner, while blowing the oxygen or the oxygen-containing gas mixture, the chamber of the molten metallic bath is subjected to, at least partial, vacuum conditions, while the melt is subjected to stirring.

Preferably, when a fuel furnace is used, the latter is fuelled with methane.

As indicated above, slags consisting mainly of metallic and non-metallic oxides resulting from the aforementioned chemical oxidation processes are formed during the melting process. In this regard, it is important to make such slags sufficiently fluid and in particular foamy so as to optimize the production process and, at the same time, add reducing agents to recover precious metals such as chromium from slags that would otherwise be lost with possible impairment of the desired properties of the alloy with a high chromium content, such as stainless steel, obtained at the end of the process.

In accordance with the present invention, the recovery of chromium from the slags is achieved by adding to the load material to be melted or to the metallic melt a composition of minerals comprising in percentages by weight on the total weight of the composition:
30% to 55% of CaO,
35 to 65% of SiO2,
1% to 15% of MgO.

In a preferred embodiment, the mineral composition comprises in percentages by weight on the total weight of the composition:
35% to 49% of CaO,
42% to 53% of SiO2
6 to 10% of MgO.

The above mineral composition may also contain:
up to 0.5% of Fe2O3
up to 1.5% of Al2O3,
up to 0.5% of Na2O and K2O.

Optionally, the aforementioned composition may comprise residual material, such as for example organic matter or traces of water, such as to obtain a loss on ignition of up to 3% LOI.

The above mineral composition can be obtained by mixing suitable minerals containing low-melting calcium silicates and magnesite with pure oxides and carbonates.

The amount of mineral composition can be varied depending on the operating parameters of the process, the type of load introduced into the furnace, the amount of slags desired and the amount of oxygen injected into the furnace where provided.

The mineral composition may be added to the metallic melt or to the load to be melted in an amount ranging from 1 kg to 30 kg per tonne of molten material, preferably in an amount ranging from 10 kg to 15 kg per tonne of molten material or total load to be melted.

Preferably, the particle size of the mineral composition is comprised between 1 and 10 mm. Such particle size can be obtained in a conventional manner, for example by procedures of grinding the minerals forming the composition, if necessary.

For the purposes of the present invention, particle size refers to the average size of the particles that make up the mineral composition of the invention.

In particular, this particle size is calculated using a sieve with holes with a diameter value equal to maximum 30 mm, more in particular equal to maximum 20 mm.

Advantageously, thanks to the aforementioned particle size or average particle dimension, the mineral composition can be used in furnaces of different sizes.

In fact, when the particle size is 8-10 mm, the mineral composition of the invention is particularly suitable for large-sized furnaces or crucibles, while when the particle size is less than 8 mm, in particular between 1-5 mm, the present mineral composition is suitable for smaller furnaces or crucibles, thus facilitating the speed of disintegration and dissolution of the mineral composition in the molten material and, therefore, allowing a more chromium-rich finished product to be obtained.

Preferably, in the melting step, the Si content in the molten material is maintained at a value equal to or greater than 0.10% by weight, preferably between 0.10% and 0.20% by weight on the weight of the molten material.

It has surprisingly been found that the addition of the mineral composition indicated above to the molten metallic material or to the load to be melted in the context of the production of alloys with a high chromium content, in particular stainless steel, more particularly chromium stainless steel, allows to prevent the oxidation of chromium as hexavalent chromium during the melting step of the load of the metallic material in the furnace while promoting the formation of liquid slags and in particular of foamy slags.

In particular, thanks to the addition of the mineral composition indicated above to the load of material to be melted or to the molten material inside the electric furnace, it is possible to obtain under normal operating conditions of production of an alloy with a high chromium content such as stainless steel a reduction of the chromium oxides to metallic chromium with consequent passage of the latter in the metallic melt and a very high recovery of the chromium contained in the load, with a yield of around 95-98%.

Without wishing to be bound by any scientific theory, it is believed that the SiO2 present in the expected amounts of the aforementioned mineral composition initially exerts a high fluidizing activity of the slags, facilitating the formation of foamy slags and that the simultaneous presence of CaO and MgO at the same time favours the formation of metallic chromium and consequent recovery of the same in the molten material.

At the end of the melting and recovery of Cr in the molten material, the liquid material thus obtained can be tapped from the furnace and immediately fed for further processing, in particular in a VOD (Vacuum Oxygen Decarburization) or AOD (Argon Oxygen Decarburization) plant, and then in a subsequent continuous casting plant, to which the molten mass is fed through casting ladles.

In light of the above, the process according to the invention achieves the intended purposes and achieves numerous advantages over known processes for the production of an alloy with a high chromium content, in particular stainless steel.

The main advantage of the process according to the invention resides in the fact that, thanks to the use of the mineral composition indicated above, an effective formation of liquid and foamy slags in the electric furnace and at the same time a high recovery of chromium in the molten material are obtained.

This advantageously increases the efficiency of the production process of the alloy with a high chromium content, in particular stainless steel, more particularly chromium steel, and of energy efficiency with a consequent reduction in energy consumption and production costs. Moreover, thanks to the efficient recovery of chromium, it is possible to improve the quality of the finished product obtained at the end of the process and, in particular, to increase the chromium content in the alloy with a high chromium content according to the desired properties. This also allows to reduce the consumption of ferrochromium during the process to reach the desired chemical values.

Furthermore, thanks to the recovery of chromium in the metallic bath, the risk of loss of hexavalent chromium in processing waste is greatly reduced, which advantageously entails lower costs of treating such waste and a lower environmental impact.

The present invention will now be illustrated by some examples of embodiment provided for indicative and not-limiting purposes.

### EXAMPLE 1

Three stainless steel production tests were carried out in an electric arc furnace (EAF) starting from a load of ferrous material coming from ferrous scraps. The loading of the ferrous material load into the furnace was carried out by a single basket. This metallic material has not been subjected to any pre-reduction with FeSi. In addition, for each casting, 3,000 kg of lime and a mineral composition were loaded, comprising:
35% to 49% of CaO,
42% to 53% of SiO2
6 to 10% of MgO.
up to 0.5% of Fe2O3
up to 1.5% of Al2O3,
up to 0.5% of Na2O and K2O.

The above mineral composition was loaded into large bags which were introduced into the first basket of the furnace for each melting in an amount of 2000 kg which is comprised between 10 kg and 15 kg per tonne of total load loaded into the furnace.

For each casting oxygen was blown into the furnace through a lance from a furnace door. During melting, the Si content was maintained at a level higher than 0.10%, in particular around 0.20%.

Under the above operating conditions, the daily production consists of about 18 casts/day with an average casting weight of about 140 tons for a total of about 2500 tons/day. The total tap-to-tap time (T.T.T.) is 72 minutes and the specific energy consumption is about 430 kWh/ton. Under these operating conditions, the estimated percentage of Cr2O3 in the slags without the use of the mineral composition of the invention ranges from 10.2% to 10.8%.

In the first test, the basket containing the ferrous scraps and the aforementioned composition were loaded into the electric arc furnace (EAF) and melting began. The weight of the metallic scraps loaded into the furnace was 143 tons.

Oxygen was then injected through the door in a total amount of 756 Nm³/ton. Slag samples were then collected after casting from the ladle.

Table 1 below reports the expected values and the values found from the analysis of some components of the steel obtained after casting, while Table 2 reports the values found from the analysis of the slags. The values are indicated as a percentage by weight on the total weight of the steel or of slags.

**Table 1 - Steel**

| Expected values (%) | | | |
|---|---|---|---|
| C | Si | Cr | Mn |
| 2.72% | 1.85 | 14.52 | 0.15 |

| Values obtained from the analysis (%) | | | |
|---|---|---|---|
| C | Si | Cr | Mn |
| 2.2 | 0.46 | 14.93 | 0.49 |

**Table 2 - Slag analysis (%)**

| CaO | SiO2 | MgO | MnO | Cr2O3 | Al2O3 |
|---|---|---|---|---|---|
| 46.8 | 38.63 | 5.82 | 1.46 | 2.08 | 3.44 |

The second test was conducted in the same manner as the first test with the difference that the weight of the metallic scraps loaded into the furnace was 135 tons and the oxygen was injected through the door in a total amount of 1000 Nm³/ton.

Table 3 below reports the expected values and the values found from the analysis of some components of the steel obtained after casting, while Table 4 reports the values found from the analysis of the slags. The values are indicated as a percentage by weight on the total weight of the steel or of slags.

**Table 3 - Steel**

| Expected values (%) | | | |
|---|---|---|---|
| C | Si | Cr | Mn |
| 1.84% | 0.15 | 14.12 | 0.15 |

| Values obtained from the analysis (%) | | | |
|---|---|---|---|
| C | Si | Cr | Mn |
| 2.2 | 0.31 | 15.96 | 0.45 |

**Table 4 - Slag analysis (%)**

| CaO | SiO2 | MgO | MnO | Cr2O3 | Al2O3 |
|---|---|---|---|---|---|
| 45.24 | 37.57 | 6.37 | 1.78 | 3.43 | 3.62 |

The third test was conducted in the same manner as the first test with the difference that the weight of the metallic scraps loaded into the furnace was 145 tons and the oxygen was injected through the door in a total amount of 1300 Nm³/ton.

Table 5 below reports the expected values and the values found from the analysis of some components of the steel obtained after casting, while Table 6 reports the values found from the analysis of the slags. The values are indicated as a percentage by weight on the total weight of the steel or of slags.

**Table 5 - Molten material**

| Expected values (%) | | | |
|---|---|---|---|
| C | Si | Cr | Mn |
| 2.74% | 1.87 | 14.48 | 0.14 |

| Values obtained from the analysis (%) | | | |
|---|---|---|---|
| C | Si | Cr | Mn |
| 2.2 | 0.319 | 16.19 | 0.427 |

**Table 6 - Slag analysis (%)**

| CaO | SiO2 | MgO | MnO | Cr2O3 | Al2O3 |
|---|---|---|---|---|---|
| 42.03% | 40.37% | 8.28% | 2.23% | 2.43% | 3.03% |

From the results reported in the above tables it can be seen that, thanks to the use of the mineral composition according to the invention, the Cr2O3 content in the slags is very much reduced and in all tests is well below 5%. This entails a high recovery of chromium C in the steel whose content found by the analyses is, in all tests, higher than that expected without using the mineral composition according to the invention. The use of the mineral composition of the invention also allows a recovery of manganese (Mn), since the content of this element in the steel is also higher than expected.

It should also be noted that the use of the mineral composition according to the invention also allows a reduction in oxygen consumption in the production of stainless steel since the aforementioned tests required a consumption of only 5-6 Nm³/ton compared to an ordinary consumption of about 9 Nm ³/h under the same operating conditions except for the use of the mineral composition according to the invention.

## Claims

1. Process for the recovery of metallic chromium from slags containing chromium oxides present in a molten material obtained by melting a metallic load suitable for the production of an alloy with a high chromium content, the process being **characterized by** adding to said metallic load or to said molten material a mineral composition comprising, in percentages by weight on the total weight of the composition:
30% to 55% of CaO,
35 to 65% of SiO2,
1% to 15% of MgO.

2. Process according to claim 1, wherein said metallic load is an iron-containing load and said alloy with a high chromium content is stainless steel.

3. Process according to claim 1 or 2, wherein said mineral composition comprises in percentages by weight on the total weight of the composition:
35% to 49% of CaO,
42% to 53% of SiO2,
6 to 10% of MgO.
and optionally,
up to 0.5% of Fe2O3,
up to 1.5% of Al2O3,
up to 0.5% of Na2O and K2O.

4. Process according to any one of the preceding claims, wherein said mineral composition is added to the metallic melt or to said load in an amount ranging from 1 kg to 30 kg per tonne of molten material, preferably in an amount ranging from 10 kg to 15 kg per tonne of molten material.

5. Process according to any one of the preceding claims, wherein said mineral composition has a particle size comprised between 1 mm and 10 mm.

6. Process according to any one of the preceding claims, wherein the Si content in the molten material is maintained at a value equal to or greater than 0.10% by weight, preferably comprised between 0.10 and 0.20% by weight on the weight of the molten material.

7. Process for the production of stainless steel comprising the steps of:
- loading in an electric arc furnace, induction furnace, fuel furnace or any combination of the above, a metallic load suitable for the production of said alloy with a high chromium content,
- melting said metallic load in said furnace, possibly in the presence of blowing of oxygen or a gaseous mixture containing oxygen in said furnace, obtaining a metallic melt and slags,
- recovering metallic chromium from said slags in said metallic melt,
the process being **characterized in that** the recovery of metallic chromium from said slags is carried out by adding to said metallic load or to said melt a mineral composition comprising in percentages by weight on the total weight of the composition:
30% to 55% of CaO,
35 to 65% of SiO2,
1% to 15% of MgO.

8. Process according to claim 7, wherein said metallic load is an iron-containing load and said alloy with a high chromium content is stainless steel.

9. Process according to claim 7 or 8, said metallic load comprises a load component chosen from an additional alloy with a high chromium content and/or an additional alloy element.

10. Process according to claim 9, wherein said metallic load is an iron-containing load, said alloy with a high chromium content is stainless steel and said additional alloy with a high chromium content is a ferroalloy, preferably an Fe-Cr alloy.

11. Process according to claim 9 or 10, wherein said additional alloy element is chosen from carbon, chromium or any combination thereof.

12. Process according to any one of claims 7 to 11, wherein the Si content in the molten material is maintained at a value equal to or greater than 0.10% by weight, preferably comprised between 0.10 and 0.20% by weight on the weight of the molten material.

13. Use of a mineral composition comprising in percentages by weight on the total weight of the composition:
30% to 55% of CaO,
35 to 65% of SiO2,
1% to 15% of MgO,
for the recovery of metallic chromium from slags containing chromium oxides present in a molten material obtained by melting a metallic load, preferably containing iron, suitable for the production of an alloy with a high chromium content, preferably stainless steel.
